(19) **Europäisches Patentamt**
**European Patent Office**
**Office européen des brevets**

(11) Veröffentlichungsnummer: **0 517 150 B1**

(12) **EUROPÄISCHE PATENTSCHRIFT**

(45) Veröffentlichungstag der Patentschrift: **15.02.95**

(51) Int. Cl.⁶: **B65G 53/52**

(21) Anmeldenummer: **92109254.0**

(22) Anmeldetag: **02.06.92**

(54) **Verfahren und Vorrichtung zum Steuern der Lufteinspeisung in die Förderleitung einer pneumatischen Förderanlage.**

(30) Priorität: **06.06.91 DE 4118560**

(43) Veröffentlichungstag der Anmeldung:
**09.12.92 Patentblatt 92/50**

(45) Bekanntmachung des Hinweises auf die Patenterteilung:
**15.02.95 Patentblatt 95/07**

(84) Benannte Vertragsstaaten:
**DE ES FR GB**

(56) Entgegenhaltungen:
**DE-A- 3 323 739**
**DE-A- 3 644 119**
**GB-A- 2 085 388**

(73) Patentinhaber: **Alb. Klein GmbH & Co. KG**
**Postfach 27**
**D-57568 Niederfischbach (DE)**

(72) Erfinder: **Federhen, Bernd, Dipl.-Ing.**

**W-5900 Siegen (DE)**
Erfinder: **May, Manfred**

**W-5241 Niederfischbach (DE)**

(74) Vertreter: **Hiebsch, Gerhard F., Dipl.-Ing.**
**Hiebsch & Peege**
**Patentanwälte**
**Postfach 464**
**D-78204 Singen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Steuern der Lufteinspeisung aus einer Begleitleitung einer pneumatischen Förderanlage in eine rohrartige Förderleitung, in die Druckgas aus einer Verbindungsleitung eingeführt und diese bei in Förderrichtung vor deren Mündung entstehendem Druckanstieg in der Förderleitung unter Luftzufuhr aus der Begleitleitung mit hohem Druck geöffnet wird, wobei diese Luftzufuhr in die Förderleitung bei darin sich aufbauendem Druckausgleich -- bevorzugt im Bereich vor sowie nach der Mündung der Verbindungsleitung -- mittels eines die Verbindungsleitung öffnenden bzw. schließenden sowie in einer von wenigstens einem Nebenstrom der Begleitleitung beaufschlagbaren Bewegungsbahn geführten Steuerorgans unterbrochen wird. Zudem erfaßt die Erfindung eine -- insbesondere, jedoch nicht ausschließlich für dieses Verfahren geeignete --Vorrichtung zum Steuern der Lufteinspeisung aus einer Begleitleitung einer pneumatischen Förderanlage in eine rohrartige Förderleitung durch eine Verbindungsleitung, die mittels eines Steuerorgans schließbar ist, insbesondere mittels eines in einem Strömungsraum bewegbaren sowie zwei Abschnitte der Verbindungsleitung in einer Grundstellung gegeneinander sperrenden kolbenartigen Schiebers, der zumindest stromaufwärts mit einer in die Förderleitung mündenden sowie -- gegebenenfalls über eine Drosselstrecke -- an den zur Begleitleitung führenden Abschnitt der Verbindungsleitung angeschlossenen Fühlerleitung in Verbindung steht.

Ein derartiges Verfahren sowie eine entsprechende Vorrichtung sind der DE-A-36 44 119 zu entnehmen.

Der Druck in der Förderrohrleitung wirkt bei dieser Vorrichtung auf den gegen die Förderrichtung ständig von einer Feder beaufschlagenden Schieber. Die Kraft der Feder muß so gewählt werden, daß der Schieber bei gleichem Druck auf den Stirnseiten in die geschlossene Stellung geschoben wird, wobei er die Reibung zum Ventilgehäuse zu überwinden hat. Damit auch bei ungünstigen Betriebsbedingungen die geschlossene Stellung des Schiebers erreicht wird, wählt man in der Praxis die Federkraft größer als die Reibungskraft; steigt der Druck in der Förderleitung -- in Förderrichtung gesehen -- vor dem Schieber auf einen größeren Wert als hinter dem Schieber, so wirkt auf den Schieber eine Öffnungskraft. Diese muß so groß sein, daß die Federkraft und die Reibung des Schiebers im Ventilgehäuse überwunden werden.

Bei einem die Vorrichtung öffnenden Ansprechdruck gehen die Reibungskraft zwischen Schieber und Gehäuse zweifach und zudem die zum sicheren Schließen des Schiebers bei Druckausgleich beider Stirnflächen notwendige Federkraft in die Kraftbilanz ein.

In Kenntnis dieses Standes der Technik hat sich der Erfinder das Ziel gesetzt, eine Lufteinspeisung mit Schieber zu schaffen, die sowohl einen geringeren Ansprechdruck hat als auch bei Druckausgleich beider Stirnflächen sicher schließt.

Zur Lösung dieser Aufgabe führt die Lehre des Patentanspruches 1; grundsätzlich wirkt eine den Schieber schließende Kraft mit Unterbrechnungen impulsweise bei kurzen Impulslängen auf diesen ein. Eine solche Kraft kann etwa elektromagnetisch oder --vorzugsweise -- durch auf die in Förderrichtung stromabliegende Stirnseite des Schiebers gegebene Luftimpulse erzeugt werden. Da diese Impulse nur kurze Zeit dauern, kann ihre Kraft bzw. ihr Druck so groß gewählt werden, daß der Schieber sicher schließt ohne gleichzeitige Erhöhung des Ansprechdrucks zur Lufteinspeisung. Eine geeignete galtungsgemäße Vorrichtung zeichnet mit dadurch aus,

daß dem in Förderrichtung weisenden Ende des Steuerorgans ein Impulskraftgeber zur intervallweisen Zugabe einer schließenden Kraft zugeordnet ist .

Insbesondere soll das Steuerorgan an seinem in Förderrichtung weisenden Ende mit pneumatischem Druck beaufschlagt und dieser impulsgesteuert der Begleitleitung und/oder einer gesonderten Druckquelle entnommen sein.

Bei einer Ausführungsform ist die Fühlerleitung an einen gegen die Förderrichtung weisenden Abschnitt der -- das Steuerorgan bzw. den Schieber aufnehmenden -- Längsbohrung und über diesen, einen Kanal und eine Drosselstrecke an den zur Begleitleitung führenden Abschnitt der Verbindungsleitung angeschlossen, wobei ein in Förderrichtung dem Steuerorgan oder Schieber nachgeordneter Abschnitt der Längsbohrung mit einer gesonderten Druckquelle für ein Druckpolster verbunden sowie an eine Impulsleitung mit Impulsventil angeschlossen ist.

Dies wird vor allem dann bedeutend, wenn der Ansprechdruck höher gewählt werden soll, als er sich aus den Reibungsverhältnissen von Schieber und Gehäuse ergibt; auf der stromabliegenden Schieberstirnseite kann ein konstantes Druckpolster einstellbaren Druckes oder/und eine Feder, deren Kraft aber nicht zum Bewegen des Schiebers ausreicht, vorgesehen werden, und auch die Federkraft kann einstellbar sein, soll aber nicht den Wert erreichen, der ohne Impulskraft zum Schließen des Ventils erforderlich wäre.

Im Rahmen der Erfindung liegt eine weitere Lösung, bei der beidseits des kolbenartigen Schiebers an der Längsbohrung des Gehäuses als Strömungsraum Fühlerleitungen vorhanden sind, die jeweils über eine Drosselstrecke an den zur Begleitleitung führenden Abschnitt der Verbindungsleitung angeschlossen sind, wobei von den Drosselstrecken etwa endwärts in die Längsbohrung mündende Kanäle ausgehen sowie ein in Förderrichtung weisender Abschnitt der Längsbohrung mit einer Impulsleitung verbunden ist, welche ein Impulsventil enthält.

Die Druckkraft für die Impulse kann also der Begleitleitung entnommen werden, wenn deren Druck ausreichend zum Rücksetzen der/des Schieber/s ist, oder -- falls deren Druck nicht ausreicht -- einer separaten mit höherem Druck gespeisten Begleitleitung.

Statt der Impulserzeugung mittels Magnetventil und der dazu notwendigen elektrischen Ansteuerung (Takterzeugung) vermag die Impulserzeugung auch mittels bekannter ausschließlich pneumatischer Schaltungen vorgenommen zu werden.

In jedem Falle kann die Schieberachse auch vertikal ausgerichtet sein, damit das Schiebergewicht die Schließbewegung unterstützt.

Die Frequenz der Schließimpulse wird der Anlage und den Eigenschaften des zu fördernden Stoffes angepaßt. So hat sich etwa bei einer langsamen Pfropfenförderung eine Impulssteuerung von ca. 1 Hz. mit einer Impulslänge von 0,1 sec als geeignet erwiesen.

Erfindungsgemäß können die Luftimpulse durch Magnetventile an jedem Steuerorgan erzeugt werden, oder mehrere der Steuerorgane werden an eine gemeinsame Impulsleitung angeschlossen und von dort geschaltet.

Nach einem weiteren Merkmal können die an der Förderleitung vorgesehenen Ventile die zwischen ihnen befindlichen Fühlerstellen gemeinsam benutzen; die zwischenliegende Fühlerstelle wird von dem in Förderrichtung zuerst liegenden Ventil als "Ausschaltfühler" und vom zweiten als "Einschaltfühler" benutzt.

Weitere Ausgestaltungen der Erfindung sind den Unteransprüchen zu entnehmen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

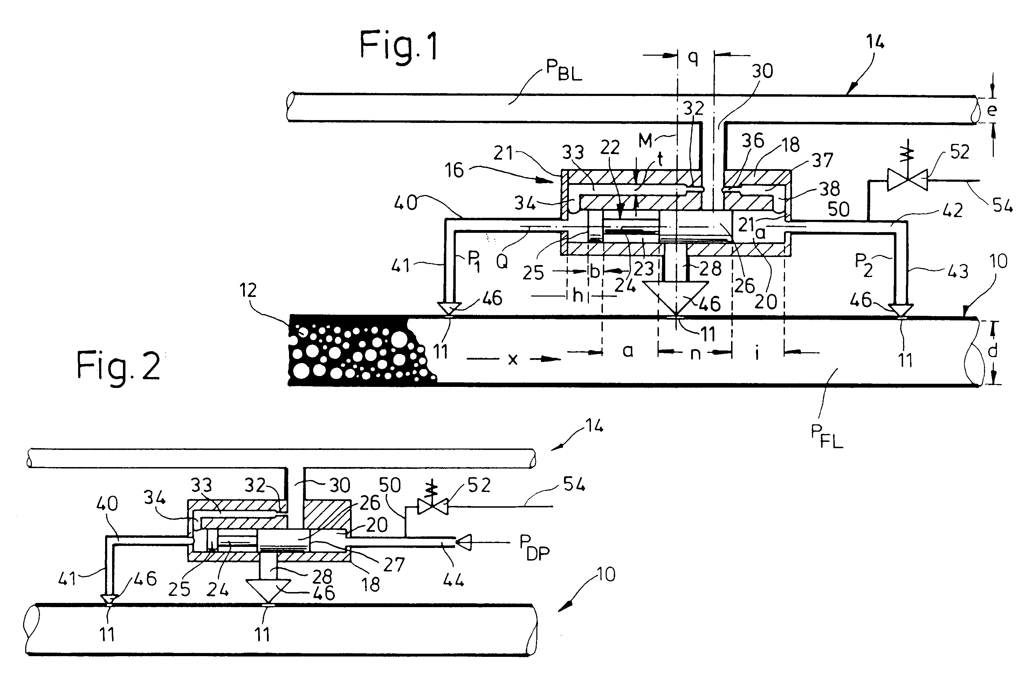

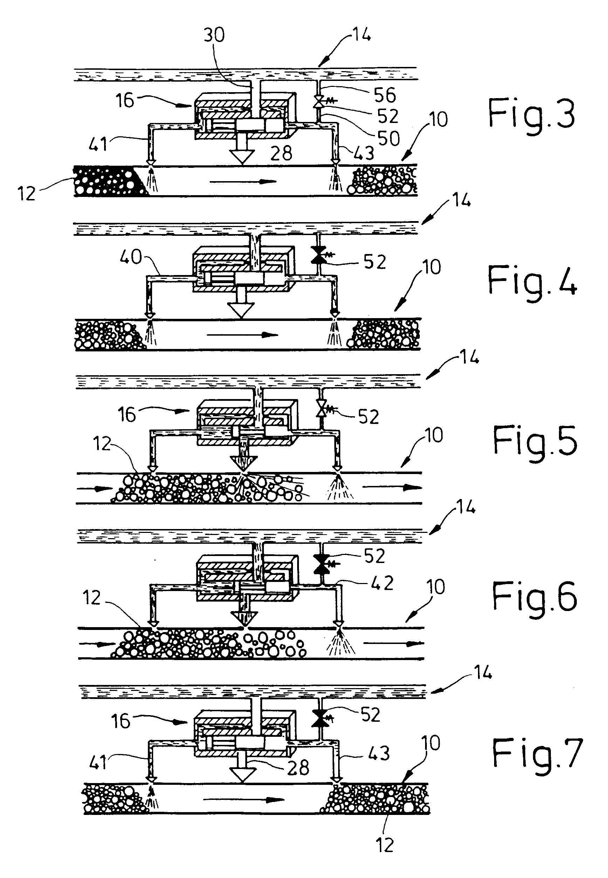

Fig. 1:
den schematisierten Längsschnitt durch ein Steuerorgan zwischen einer Förderleitung für Schüttgut sowie einer Begleitleitung;
Fig. 2:
eine andere Ausführung eines Steuerorgans zwischen Förder- und Begleitleitung;
Fig. 3:
einen gegenüber Fig. 1,2 verkleinerten und teilweise axonometrisch gestalteten Längsschnitt durch einen Teil einer Förderanlage mit Steuerorgan;
Fig. 4 bis Fig. 7:
die Förderanlage nach Fig. 3 in zu letzterer unterschiedlichen Betriebsstellungen.

Zwischen einer Förderleitung 10 eines inneren Durchmessers d -- für in Richtung x bewegtes Schüttgut 12 -- sowie einer parallelen Begleitleitung 14, deren Durchmesser e hier etwa dem vierten Teil des Durchmessers d der Förderleitung 10 entspricht, ist ein Steuerorgan 16 mit einem quaderförmigen Gehäuseblock 18 vorgesehen. Dieser enthält eine zu den Leitungen 10, 14 parallele Längs- oder Zylinderbohrung 20 für einen Schieber 22, der aus zwei durch einen axialen Schieberstab 24 der Länge a verbundenen bolzenartigen Kolbenkörpern 25, 26 unterschiedlicher Längen b, n besteht. Der Schieberstab 24 begrenzt mit der Wandung der Längs- oder Zylinderbohrung 20 einen Ringraum 23.

Von der beidends -- beispielsweise durch eine abnehmbare Stirnplatte 21 oder eine mit dem Gehäuseblock 18 einstückige Stirnwand $21_a$ --geschlossenen Längsbohrung 20 geht in der dazu radialen Mittelachse M des Gehäuseblockes 18 eine quer zur Förderleitung 10 gerichtete Verbindungsleitung 28 aus sowie dazu -- in Bohrungslängsachse Q um ein Maß q versetzt -- eine außermittige Anschlußleitung 30, welche die Längsbohrung 20 mit der Begleitleitung 14 verbindet.

In die außermittige Anschlußleitung 30 münden in Fig. 1 auf einem gemeinsamen Durchmesser zwei -- somit einander gegenüberliegende --Drosselstrecken oder -stellen 32, 36, eines Durchmessers von bevorzugt bis 1 mm, welche sich beide als Kanalabschnitte 33 bzw. 37 größeren Durchmessers t parallel zur Längsbohrung 20 fortsetzen. Sie sind mit der Längsbohrung durch Radialbohrungen 34 bzw. 38 verbunden und erreichen die Längsbohrung 20 an den Bohrungsstirnenden 21 bzw. $21_a$. Von letzteren gehen -- zur Längsbohrung 20 koaxial -- Fühlerleitungen 40, 42 aus, die mit Radialabschnitten 41 bzw. 43 zur Förderleitung 10 weisen.

Am Übergang zwischen der Verbindungs- oder Querleitung 28 bzw. den Radialabschnitten 41, 43 der Fühlerleitungen 40 einerseits sowie seitlichen Ausnehmungen 11 in der Förderleitung 10 anderseits sind Rückschlagventile als Schaltfühler oder Filter 46 angeordnet. Diese Rückschlagventile bzw. Filter 46 verhindern das Eindringen von Schmutzpartikeln in die Längsbohrung 20.

In der in Fig. 1 rechten Fühlerleitung 42 endet eine Impulsleitung 50, die mittels eines Impulsventils 52 an eine Nebenleitung 54 angeschlossen ist.

Bei der Ausführung nach Fig. 2 ist nur dem -- dort rechts liegenden --kurzen Kolbenkörper 25 eine Fühlerleitung 40 mit Radialabschnitt 41 zugeordnet; der sich vor der Stirn 27 des längeren Kolbenkörpers 26 erstreckende Abschnitt der Längsbohrung 20 öffnet sich hier ausschließlich zu einer Zuleitung 44, an welcher jene Impulsleitung 50 ansetzt.

In der in Fig. 1, 2 wiedergegebenen Grundstellung des Schiebers 22 steht dessen kürzerer Kolbenkörper 25 in einem Abstand h zur Innenseite der Stirnplatte 21 sowie der längere Kolbenkörper 26 in einem Abstand i zur nächstliegenden Bohrungsstirn $21_a$, und der Schieber 22 verschließt dabei -- sich zwischen den Radialabschnitten 41, 43 der Fühlerleitungen 40, 42 befindend -- sowohl die nach unten gerichtete Querleitung 28 als auch die dazu parallel versetzte außermittige Anschlußleitung 30. Somit ist die Querleitung 28 in der Grundstellung von der Anschlußleitung 30 -- und damit von der Begleitleitung 14 -- getrennt.

Ein in der Begleitleitung 14 herrschender Luftdruck $P_{BL}$ ist üblicherweise höher als der Druck $P_{FL}$ in der Förderleitung 10, die --wie beschrieben -- in Grundstellung des Schiebers 22 dank des Kolbenkörpers 26 von der Begleitleitung 14 getrennt ist. Steigt beispielsweise durch einen in der Förderleitung 10 nahenden Pfropfen 12 der Druck $P_1$ in der ersten Fühlerleitung 40 an -- die zum einen über ihre Drosselstrecke 32 an die Anschlußleitung 30 sowie zum anderen durch die andere Drosselstrecke 36 an die Längsbohrung 20 angeschlossen ist --, bewegt sich der Schieber 22 in Förderrichtung x, bis der Ringraum 23 beide Querleitungen 28, 30 erfaßt: von der Begleitleitung 14 strömt Druckluft $P_{BL}$ in die Förderleitung 10 (Fig. 5, 6).

Hat der mit Druck beaufschlagte Pfropfen 12 die Mündung der Querleitung 28 und die Mündung der zweiten Fühlerleitung 42 passiert, gleicht sich der Druck in beiden Fühlerleitungen 40, 42 wieder aus, und der Schieber 22 gleitet beim nächsten Schließimpuls in seine Grundstellung zurück.

Durch die Fühlerleitungen 44, 45 strömt eine sehr geringe Menge an Luft, die der Begleitleitung 14 entnommen und bezüglich ihrer Quantität durch die Drosselstrecken 32, 36 bestimmt ist.

Die Bewegung des Schiebers 22 gegen die Förderrichtung x erfolgt durch dessen Beaufschlagung mit einem durch die Impulsleitung 50 eingeleiteten Impulsstrom von beispielsweise 1 Hz mit einer Impulslänge von 0,1 sec für langsame Pfropfenförderung. Die Impulse können beispielsweise durch Magnetventile erzeugt werden.

In der Ausführung nach Fig. 1 wird die in die Fühlerleitung 42 mündende Impulsleitung 50 von einem nicht wiedergegebenen Druckluftnetz durch Nebenleitung 54 gespeist. Bei dem Beispiel der Fig. 2 entfällt -- wie bereits erwähnt -- die stromab liegende Fühlerleitung 42, da hier an der Stirn 27 des Kolbenkörpers 26 ein konstantes Druckpolster mit einstellbarem Druck $P_{DP}$ gehalten wird, der nicht zur Bewegung des Schiebers 22 ausreichen muß. Der Druck $P_{DP}$ wird dem an der jeweiligen Vorrichtung gewünschten Ansprechdruck entsprechend eingestellt.

In den Fig. 3 bis 7 ist statt der beschriebenen Nebenleitung 54 ein Anschluß 56 an die Begleitleitung 14 vorgesehen, der hier mit der Impulsleitung 50 fluchtet; die Impulsluft wird ausschließlich der Begleitleitung 14 entnommen.

In Fig. 3 steht der Schieber 22 in Grundstellung, d.h. er ist geschlossen. Das Impulsventil 52 ist nicht aktiv, es erfolgt also keine Lufteinspeisung, lediglich die Beaufschlagung mit Fühlerluft

$$P_1 = P_2.$$

Auch wenn sich kein Pfropfen 12 an der Fühlerstelle 11/41 befindet, kommen die Impulse mit der gewählten Frequenz und Dauer, um den in Grundstellung schließenden Schieber 22 in Grundstellung zu halten (Fig. 4).

In Fig. 5 hat sich ein Pfropfen 12 unter die erste Fühlerstelle 11/41 geschoben. Der Druck $P_1$ steigt, und der Schieber 22 bewegt sich ohne Impulszugabe in Öffnungsstellung. Da es eine Feder zu Rückstellung nicht gibt, muß der Schieber 22 nur die Reibung zum Gehäuseblock 18 überwinden. Der Propfen wird aufgelockert:

$$P_1 > P_2.$$

Während sich der Propfen 12 in Förderrichtung x bewegt, können mehrere Rücksetzimpulse auf den Schieber 22 gelangen. Er schließt während der Impulsdauer und öffnet sofort nach Abklingen des Impulses wieder, läßt also weiter Luft in den Pfropfen strömen, solange $P_1$ größer ist als $P_2$.

Der Pfropfen 12 ist in Fig. 7 an der Fühlerstelle 11/41 vorbei:

$$P_1 \leq P_2.$$

Der nächste ankommende Luftimpuls bringt den Schieber 22 in die geschlossene Stellung zurück. Die Luftzufuhr wird bis zum nächsten Propfen 12 unterbrochen.

**Patentansprüche**

1. Verfahren zum Steuern der Lufteinspeisung aus einer Begleitleitung einer pneumatischen Förderanlage in eine rohrartige Förderleitung, in die Druckgas aus einer Verbindungsleitung eingeführt und diese bei in Förderrichtung vor deren Mündung entstehendem Druckanstieg in der Förderleitung unter Luftzufuhr aus einer Begleitleitung mit hohem Druck geöffnet wird, wobei diese Luftzufuhr in die Förderleitung bei darin sich aufbauendem Druckausgleich mittels eines die Verbindungsleitung öffnenden bzw. schließenden sowie in einer von wenigstens einem Nebenstrom der Begleitleitung beaufschlagbaren Bewegungsbahn geführten Steuerorgans unterbrochen wird,
dadurch gekennzeichnet,
daß dem Steuerorgan eine schließende Kraft mit Unterbrechnungen impulsweise bei kurzen Impulslängen aufgegeben wird.

2. Verfahren nach Anspruch 1, gekennzeichnet durch eine Kraft, die geringer als eine gleichgerichtete Bewegungskraft für das Steuerorgan eingestellt wird.

3. Verfahren nach Anspruch 1 oder 2, dadurch gekennzeichnet, daß das Steuerorgan stromabwärts mit einem Strömungsmedium pulsierend beaufschlagt wird, welches der Begleitleitung oder einer gesonderten pneumatischen Quelle entnommen wird.

4. Verfahren nach einem der Ansprüche 1 bis 3, dadurch gekennzeichnet, daß das Steuerorgan stromabwärts mit einem konstanten Druckpolster einstellbaren Druckes beaufschlagt wird, wobei gegebenenfalls der Druck des Druckpolsters geringer eingestellt wird als der für eine gleichgerichtete Bewegung erforderliche Druck des Steuerorgans.

5. Verfahren nach einem der Ansprüche 1 bis 4, gekennzeichnet durch Impulse von etwa 1 Hz mit einer Impulslänge von etwa 0,1 sec.

6. Vorrichtung zum Steuern der Lufteinspeisung aus einer Begleitleitung einer pneumatischen Förderanlage in eine rohrartige Förderleitung durch eine Verbindungsleitung, die mittels eines Steuerorgans schließbar ist, insbesondere mittels eines in einem Strömungsraum bewegbaren sowie zwei Abschnitte der Verbindungsleitung in einer Grundstellung gegeneinander sperrenden kolbenartigen Schiebers, der zumindest stromaufwärts mit einer in die Förderleitung mündenden sowie an den zur Begleitleitung führenden Abschnitt der Verbindungsleitung angeschlossenen Fühlerleitung in Verbindung steht, vor allem zur Durchführung des Verfahrens nach einem der voraufgehenden Ansprüche, dadurch gekennzeichnet, daß dem in Förderrichtung (x) weisenden Ende des Steuerorgans (22) ein Impulskraftgeber zur intervallweisen Zugabe einer schließenden Kraft zugeordnet ist.

7. Vorrichtung nach Anspruch 6, dadurch gekennzeichnet, daß das Steuerorgan (22) an seinem in Förderrichtung (x) weisenden Ende (27) mit pneumatischem Druck beaufschlagt und dieser impulsgesteuert der Begleitleitung (14) und/oder einer gesonderten Druckquelle (54) entnommen ist.

8. Vorrichtung nach Anspruch 6 oder 7, dadurch gekennzeichnet, daß die Fühlerleitung (40,41) in einen gegen die Förderrichtung (x) weisenden Abschnitt (h) der das Steuerorgan bzw. den Schieber (22) aufnehmenden Längsbohrung (20) mit einem Kanal (33,34) und einer Drosselstrecke (32) an den zur Begleitleitung (14) führenden Abschnitt (30) der Verbindungsleitung (28-20-30) angeschlossen ist, wobei ein in Förderrichtung dem Steuerorgan oder Schieber nachgeordneter Abschnitt (i) der Längsbohrung mit einer gesonderten Druckquelle (44) für ein Druckpolster ($P_{DP}$) verbunden sowie an eine Impulsleitung (50) mit Impulsventil (52) angeschlossen ist.

9. Vorrichtung nach einem der Ansprüche 6 bis 8, dadurch gekennzeichnet, daß der Schieber (22) als Magnet ausgebildet sowie einer magnetischen Spule zugeordnet ist.

10. Vorrichtung nach einem der Ansprüche 7 bis 10, gekennzeichnet durch eine beidseits eines kolbenartigen Schiebers von einer Längsbohrung eines Gehäuses als Strömungsraum ausgehenden und jeweils über eine Drosselstrekke an den zur Begleitleitung führenden Abschnitt der Verbindungsleitung angeschlossenen Fühlerleitung, wobei von den Drosselstrekken (32,36) etwa endwärts in die Längsbohrung (20) mündende Kanäle (33,34;37,38) ausgehen sowie ein in Förderrichtung (x) weisender Abschnitt der Längsbohrung mit einer Impulsleitung (50) verbunden ist, welche ein Impulsventil (52) enthält.

11. Vorrichtung nach einem der Ansprüche 6 bis 10, dadurch gekennzeichnet, daß als Impulsgeber rein pneumatisch wirkende Ventile vorgesehen sind oder Magnetventile.

12. Vorrichtung mit an der Förderleitung vorgesehenen Ventilen für Verbindungsleitung und Fühlerleitung nach wenigstens einem der Ansprüche 6 bis 11, dadurch gekennzeichnet, daß das in Förderrichtung (x) erste Ventil (46) für das Ventil der Verbindungsleitung (28) ein Ausschaltfühler und/oder ein der Verbindungsleitung nachgeordnetes Ventil für diese ein Einschaltfühler ist.

13. Vorrichtung nach wenigstens einem der Ansprüche 6 bis 12, dadurch gekennzeichnet, daß dem Schieber (22) beidseits luftführende Abschnitte (h,i) seiner Längsbohrung (20) zugeordnet sind, wobei gegebenenfalls in die luftführenden Abschnitte (h,i) jeweils wenigstens ein luftführender Kanal (33,34;37,38) mündet.

## Claims

1. Method for controlling the air supply from an accessory pipe of a pneumatic conveying system to a tube-like conveying pipe into which compressed gas is introduced from a connecting pipe and the latter is opened in case of a pressure rise in the conveying pipe occurring before the mouth thereof in the direction of conveying, with supply of air from an accessory pipe at high pressure, wherein this air supply to the conveying pipe when pressure equalisation builds up therein is interrupted by means of a control member which opens and closes the connecting pipe and also is guided in a path of movement which can be subjected to at least one auxiliary stream of the accessory pipe, characterised in that a closing force is applied to the control member with interruptions in pulse fashion with short pulse lengths.

2. Method according to claim 1, characterised by a force which is set lower than a force of movement in the same direction for the control member.

3. Method according to claim 1 or 2, characterised in that the control member is subjected in pulsating relationship downstream to a flow medium which is taken from the accessory pipe or a separate pneumatic source.

4. Method according to any of claims 1 to 3, characterised in that the control member is subjected downstream to a constant pressure cushion of variable pressure, wherein if occasion arises the pressure of the pressure cushion is set lower than the pressure of the control member required for a movement in the same direction.

5. Method according to any of claims 1 to 4, characterised by pulses of about 1 Hz with a pulse length of about 0.1 s.

6. Device for controlling the air supply from an accessory pipe of a pneumatic conveying system to a tube-like conveying pipe through a connecting pipe which is closable by means of a control member, in particular by means of a piston-like slide which is movable in a flow chamber and also blocks off two sections of the connecting pipe from each other in a normal position and which at least upstream is connected to a tracer pipe opening into the conveying pipe and also connected to the section of the connecting pipe leading to the accessory pipe, above all for carrying out the method according to any of the preceding claims, characterised in that a pulse transmitter for supplying a closing force at intervals is associated with the end of the control member (22) pointing in the direction of conveying (x).

7. Device according to claim 6, characterised in that the control member (22) at its end (27) pointing in the direction of conveying (x) is subjected to pneumatic pressure and the latter is derived under pulse control from the accessory pipe (14) and/or a separate pressure source (54).

8. Device according to claim 6 or 7, characterised in that the tracer pipe (40, 41) in a section (h) of the longitudinal bore (20) receiving the control member or slide (22), with a channel (33, 34) and a throttle zone (32), which section points opposite the direction of conveying (x), is connected to the section (30) of the connecting pipe (28-20-30) leading to the accessory pipe (14), wherein a section (i) of the longitudinal bore behind the control member or slide in the direction of conveying is connected to a separate pressure source (44) for a pressure cushion ($P_{DP}$) and also connected to a pulse pipe (50) with pulse valve (52).

9. Device according to any of claims 6 to 8, characterised in that the slide (22) is constructed as a magnet and also associated with a magnetic coil.

10. Device according to any of claims 7 to 10, characterised by a tracer pipe starting on both sides of a piston-like slide from a longitudinal bore of a housing as a flow chamber and in each case connected via a throttle zone to the section of the connecting pipe leading to the accessory pipe, wherein channels (33, 34; 37, 38) opening more or less in the direction of the end into the longitudinal bore (20) start from the throttle zones (32, 36), and also a section of the longitudinal bore pointing in the direction of conveying (x) is connected to a pulse pipe (50) which contains a pulse valve (52).

11. Device according to any of claims 6 to 10, characterised in that purely pneumatically operating valves or solenoid valves are provided as pulse transmitters.

**12.** Device with valves provided on the conveying pipe for connecting pipe and tracer pipe according to one or more of claims 6 to 11, characterised in that the first valve (46) in the direction of conveying (x) for the valve of the connecting pipe (28) is a switch-off tracer and/or a valve arranged behind the connecting pipe for the latter is a switch-on tracer.

**13.** Device according to one or more of claims 6 to 12, characterised in that sections (h, i) of its longitudinal bore (20) which conduct air on both sides are associated with the slide (22), wherein if occasion arises in each case at least one air-conducting channel (33, 34; 37, 38) opens into the air-conducting sections (h, i).

**Revendications**

**1.** Procédé pour commander l'entrée d'air en provenance d'une conduite secondaire d'une installation de transport pneumatique, dans une conduite de transport du type tubulaire, dans laquelle on introduit du gaz comprimé en provenance d'une conduite de raccordement et que l'on ouvre sous forte pression lorsque, dans le sens d'écoulement, avant le dégorgement de celle-ci, la pression dans la conduite de transport augmente sous l'effet d'une arrivée d'air en provenance d'une conduite secondaire, ladite arrivée d'air dans la conduite de transport dans laquelle une compensation de pression se produit progressivement étant interrompue par un organe de commande qui ouvre ou ferme la conduite de raccordement et qui est guidé dans une voie de déplacement susceptible d'être alimentée par au moins un écoulement en dérivation de la conduite secondaire,
caractérisé en ce qu'on applique par intermittence sur l'organe de commande une force de serrage par impulsions à courte durée.

**2.** Procédé selon la revendication 1, caractérisé par une force que l'on règle plus faible qu'une force motrice agissant dans le même sens pour l'organe de commande.

**3.** Procédé selon la revendication 1 ou 2, caractérisé en ce que l'organe de commande est alimenté vers l'aval par pulsations par un fluide qui est prélevé sur la conduite secondaire ou sur une source pneumatique isolée.

**4.** Procédé selon l'une quelconque des revendications 1 à 3, caractérisé en ce qu'on applique sur l'organe de commande en aval un matelas constant de pression réglable, la pression du matelas étant réglée le cas échéant plus faible que la pression de l'organe de commande nécessaire à un mouvement agissant dans le même sens.

**5.** Procédé selon l'une quelconque des revendications 1 à 4, caractérisé par des impulsions d'environ 1 Hz avec une durée d'impulsion de 0,1 sec. environ.

**6.** Dispositif pour commander l'entrée d'air en provenance d'une conduite secondaire d'une installation de transport pneumatique dans une conduite de transport du type tubulaire par l'intermédiaire d'une conduite de raccordement que l'on peut fermer au moyen d'un organe de commande, notamment au moyen d'un robinet du type robinet à piston susceptible d'être déplacé dans une chambre d'écoulement et de bloquer deux tronçons de la conduite de raccordement l'un contre l'autre dans une position zéro, lequel robinet est en liaison au moins en amont avec une conduite à palpeur débouchant dans la conduite de transport et reliée au tronçon de la conduite de raccordement qui mène à la conduite secondaire, dispositif notamment pour la mise en oeuvre du procédé selon l'une quelconque des revendications précédentes, caractérisé en ce qu'un générateur de force pulsé destiné à générer par intervalles une force de fermeture est associé à l'extrémité de l'organe de commande (22) dirigée dans le sens d'écoulement (x).

**7.** Dispositif selon la revendication 6, caractérisé en ce que l'extrémité (27) de l'organe de commande (22) dirigée dans le sens d'écoulement (x) est mise sous pression pneumatique et que cette pression, commandée par impulsion, est prélevée sur la conduite secondaire (14) et/ou une source de pression (54) isolée.

**8.** Dispositif selon la revendication 6 ou 7, caractérisé en ce que la conduite à palpeur (40, 41) est reliée, dans une partie (h), orientée, dans un sens opposé au sens d'écoulement (x), d'un perçage longitudinal (20) dans lequel est logé l'organe de commande ou le robinet (22), par un canal (33, 34) et une voie d'étranglement (32), au tronçon (30) de la conduite de raccordement (28-20-30) conduisant à la conduite secondaire (14), un tronçon (i) du perçage longitudinal, disposé en aval de l'organe de commande ou du robinet dans le sens d'écoulement étant relié à une source de pression (44) isolée pour un matelas de pression ($P_{DP}$), et raccordé à une conduite à impulsions (50) équipée d'une vanne à impulsions (52).

9. Dispositif selon l'une des revendications 6 à 8, caractérisé en ce que le robinet (22) est un aimant et est associé à un solénoïde.

10. Dispositif selon l'une quelconque des revendications 7 à 10, caractérisé par une conduite à palpeur partant de part et d'autre d'un robinet de type robinet à piston, à partir d'un perçage longitudinal d'un bâti servant de chambre d'écoulement et reliée respectivement par un tronçon d'étranglement au tronçon de la conduite de raccordement conduisant à la conduite secondaire, des canaux (33, 34; 37, 38) partant des tronçons d'étranglement (32, 36) et débouchant dans le perçage longitudinal (20) sensiblement au niveau de son extrémité, et un tronçon du perçage longitudinal orienté dans le sens d'écoulement (x) étant relié à une conduite d'impulsions (50) qui comporte une vanne à impulsions (52).

11. Dispositif selon l'une des revendications 6 à 10, caractérisé en ce que les générateurs d'impulsions se présentent sous forme de vannes à action purement pneumatique ou d'électrovannes.

12. Dispositif comportant sur la conduite de transport des vannes pour la conduite de raccordement et la conduite à palpeur selon au moins une des revendications 6 à 11, caractérisé en ce que la première vanne (46) dans le sens d'écoulement (x) destinée à la vanne de la conduite de raccordement (28) est un palpeur de coupure et/ou qu'une vanne montée en aval de la conduite de raccordement pour ladite vanne de la conduite de raccordement est un palpeur de contact.

13. Dispositif selon au moins une des revendications 6 à 12, caractérisé en ce que sont associés au robinet (22), de part et d'autre, des tronçons conducteurs d'air (h,i) de son perçage longitudinal (20), au moins un canal conducteur d'air (33,34;37,38) débouchant respectivement le cas échéant dans les tronçons conducteurs d'air (h, i).

# Fig.1

# Fig.2

EP 0 517 150 B1

Fig.3

Fig.4

Fig.5

Fig.6

Fig.7